# EUROPEAN PATENT SPECIFICATION

(11) **EP 2 905 443 B1**
(45) Date of publication and mention of the grant of the patent: **23.11.2016**
(21) Application number: 15154469.9
(22) Date of filing: 10.02.2015
(51) Int. Cl.: F01N 3/20, F01N 9/00, F01N 13/00

(54) **EXHAUST GAS PURIFICATION APPARATUS FOR AN INTERNAL COMBUSTION ENGINE**
ABGASREINIGUNGSVORRICHTUNG FÜR EINEN VERBRENNUNGSMOTOR
APPAREIL DE PURIFICATION DE GAZ D'ÉCHAPPEMENT POUR MOTEUR À COMBUSTION INTERNE

(30) Priority: 10.02.2014 JP 2014023174
(43) Date of publication of application: 12.08.2015
(73) Proprietor: Toyota Jidosha Kabushiki Kaisha, Toyota-shi, Aichi-ken 471-8571 (JP)
(72) Inventor: Takada, Keishi, Toyota-shi, Aichi-ken 471-8571 (JP); Ohashi, Nobumoto, Toyota-shi, Aichi-ken 471-8571 (JP); Nakayama, Shigeki, Toyota-shi, Aichi-ken 471-8571 (JP); Mikami, Akira, Toyota-shi, Aichi-ken 471-8571 (JP); Matsuo, Junichi, Toyota-shi, Aichi-ken 471-8571 (JP)
(74) Representative: Intès, Didier Gérard André

(56) References cited:
- JP-A- 2009 275 667
- JP-A- 2013 144 938
- US-A1- 2009 293 459

## Description

### [TECHNICAL FIELD]

The present invention relates to an exhaust gas purification apparatus for an internal combustion engine.

### [BACKGROUND ART]

As an exhaust gas purification apparatus arranged in an exhaust passage of an internal combustion engine, there has been developed one in which an NOx selective catalytic reduction catalyst (hereinafter, also referred to as an SCR catalyst) is supported in a filter. The filter serves to trap particulate matter (hereinafter, also referred to as PM) in exhaust gas. The SCR catalyst serves to reduce NOx in the exhaust gas by using ammonia (NH₃) as a reducing agent. In the following, such a filter supporting the SCR catalyst thereon is also referred to as an SCRF.

At the upstream side of the SCRF, there is arranged a reducing agent addition valve which serves to supply ammonia or a precursor of ammonia (e.g., urea) into the exhaust gas. Here, in the past, a filter is provided at the downstream side of the reducing agent addition valve (for example, refer to a first patent literature). On the other hand, in the SCRF, the reducing agent addition valve is provided at the upstream side of the filter. In cases where the reducing agent addition valve is provided at the upstream side of the reducing agent addition valve, a relatively large amount of PM is contained in exhaust gas flowing around the reducing agent addition valve. When the PM in this exhaust gas adheres to the reducing agent addition valve, the opening area of a nozzle (injection) hole of the valve becomes narrow, so there is a fear that an amount of reducing agent per unit time to be supplied from the reducing agent addition valve may be decreased. For this reason, the amount of reducing agent in the SCR catalyst becomes short or insufficient, thus giving rise to a fear that the removal or reduction rate of NOx (hereinafter, also referred to as the rate of NOx removal or reduction) may become low. Here, note that the same can be said in the case of no provision of the filter, too.

Here, it can be considered that the PM adhered to the reducing agent addition valve is removed by the injection force of the reducing agent, by increasing an amount of supply of the reducing agent per one time at the time of supplying the reducing agent from the reducing agent addition valve. However, an amount of reducing agent, which can be adsorbed to the SCR catalyst, becomes low when the temperature of the SCR catalyst is high, and hence, when the amount of supply of the reducing agent per one time is made to increase, the reducing agent passing through the SCR catalyst will increase. In addition, when the temperature of the SCR catalyst is low, the amount of reducing agent, which can be adsorbed by the SCR catalyst, is relatively large, but there is still a limitation in the amount of reducing agent able to be adsorbed. Moreover, when the PM adhered to the reducing agent addition valve is removed, there is a fear that if the amount of supply of the reducing agent is excessive, the reducing agent may flow out from the SCR catalyst. On the other hand, when the amount of supply of the reducing agent runs short, there is a fear that at the time of removing the PM adhered to the reducing agent addition valve, the rate of NOx reduction may decrease or become low.

Some references of background art are Japanese Patent Laid-Open Publications Nos. 2011-190720, 2012-036839, 2013-170570, 2013-144938 and 2009-275667. The latter in particular disclosed a method and device to remove adhered particulate matter in an exhaust gas purification apparatus of an internal combustion engine.

### [SUMMARY OF THE INVENTION]

### [PROBLEMS TO BE SOLVED BY THE INVENTION]

The present invention has been made in view of the problems as referred to above, and has for its object to reduce an amount of PM adhered to a reducing agent addition valve, while suppressing a decrease in the rate of NOx removal or reduction.

### [MEANS FOR SOLVING THE PROBLEMS]

In order to solve the above-mentioned problems, the present invention resides in an exhaust gas purification apparatus for an internal combustion engine which is provided with:
an NOx selective catalytic reduction catalyst that is arranged in an exhaust passage of the internal combustion engine and selectively reduces NOx in an exhaust gas by using ammonia as a reducing agent; and
a supply device that supplies the reducing agent into the exhaust passage at a location upstream of said NOx selective catalytic reduction catalyst;
wherein provision is made for a control device that controls in such a manner that an amount of the reducing agent supplied from said supply device per one time is made larger in the case where a predetermined condition for decreasing an amount of particulate matter adhered to said supply device is satisfied, than in the case where the predetermined condition is not satisfied, and that in the case where said predetermined condition is satisfied, an interval of supply of the reducing agent from said supply device is made longer in the case where the temperature of said NOx selective catalytic reduction catalyst is less than a predetermined temperature, than in the case where the temperature of said NOx selective catalytic reduction catalyst is equal to or higher than the predetermined temperature.

The NOx selective catalytic reduction catalyst (SCR catalyst) may be supported by a filter. In addition, the SCR catalyst and the filter may be arranged at the downstream side of the supply device. The predetermined condition is satisfied in cases where there is a request for removing the particulate matter (PM) from the supply device. For example, in cases where the amount of PM adhered to the supply device or a value having a correlation with the amount of PM adhered to the supply device becomes equal to or more than a threshold value, it may be assumed that the predetermined condition is satisfied. In addition, when the PM adhered to the supply device exceeds an allowable range, for example, it may be assumed that the predetermined condition is satisfied. Moreover, it may be assumed that the predetermined condition is satisfied at every predetermined period of time, for example.

In cases where the amount of PM adhered to the supply device has become large, the PM adhered to the supply device can be removed by means of the reducing agent, by increasing the amount of supply of the reducing agent per one time. Here, the larger the amount of supply of the reducing agent per one time, the larger becomes the effect of removing the PM. Note that by raising the pressure of the reducing agent, the amount of supply of the reducing agent per one time may also be made larger, or by making longer the supply period of time of the reducing agent, the amount of supply of the reducing agent per one time may also be made larger.

Here, in the case where the temperature of the SCR catalyst is low, the amount of reducing agent, which can be adsorbed by the SCR catalyst, becomes larger than in the case where the temperature of the SCR catalys is high. That is, the amount of the reducing agent which can be adsorbed by the SCR catalyst changes with the temperature of the SCR catalyst. Even the amount of reducing agent, which can be adsorbed by the SCR catalyst in the case where the temperature of the SCR catalyst is relatively low, may become unable to be adsorbed, in the case where the temperature of the SCR catalyst is relatively high. In order to remove the PM from the supply device, it is effective to increase the amount of supply of the reducing agent per one time, but even if the amount of supply of the reducing agent is increased, there is a fear that when the temperature of the SCR catalyst is high, a part of the reducing agent may pass through the SCR catalyst, without being adsorbed to the SCR catalyst.

That is, in the case where the temperature of the SCR catalyst is low, the amount of reducing agent, which can be adsorbed to the SCR catalyst, is relatively large, so even if the amount of reducing agent to be supplied to the SCR catalyst is increased, the reducing agent can be caused to be adsorbed to the SCR catalyst. However, there is a limitation on the amount of reducing agent which can be adsorbed by the SCR catalyst. On the other hand, by making longer the interval of supply of the reducing agent, it is possible to suppress the reducing agent from flowing out of the SCR catalyst. In addition, a sufficient amount of reducing agent has been able to be adsorbed to the SCR catalyst, so that even if the interval of supply of the reducing agent is made longer, a decrease in the NOx removal or reduction rate is suppressed. On the other hand, in the case where the temperature of the SCR catalyst is high, the amount of reducing agent, which can be adsorbed by the SCR catalyst, becomes small. For this reason, when the amount of supply of the reducing agent per one time is increased, the reducing agent may flow out of the SCR catalyst, with the SCR catalyst being unable to adsorb the reducing agent to a full or sufficient extent. Accordingly, if the interval of supply of the reducing agent is made long when the temperature of the SCR catalyst is high, such as when the temperature of the SCR catalyst is low, the reducing agent may run short. As a result of this, there is a fear that the removal or reduction rate of NOx may decrease or become low.

Accordingly, the control device makes the interval of supply of the reducing agent to be supplied from the supply device longer in the case where the temperature of the SCR catalyst is less than the predetermined temperature, than in the case where it is equal to or higher than the predetermined temperature. In the case where the temperature of the SCR catalyst is less than the predetermined temperature, a large amount of reducing agent can be caused to be adsorbed to the SCR catalyst, so that the interval of supply of the reducing agent can be made relatively longer according to an increase in the amount of supply of the reducing agent. On the other hand, in the case where the temperature of the SCR catalyst is equal to or higher than the predetermined temperature, it is difficult to cause a large amount of reducing agent to be adsorbed to the SCR catalyst, so that the interval of supply of the reducing agent is made relatively short. As a result of this, it is possible to suppress the removal or reduction rate of NOx from decreasing or becoming low. The predetermined temperature is a lower limit value of a temperature at which when the amount of supply of the reducing agent per one time and the interval of supply of the reducing agent are made large, there will be a fear that the rate of NOx reduction may decrease or become low. In this manner, it is possible to suppress a decrease in the amount of the reducing agent to be supplied from the supply device, while suppressing the rate of NOx reduction from being decreased.

In the case where said predetermined condition is satisfied, and in the case where the temperature of said NOx selective catalytic reduction catalyst is equal to or higher than the predetermined temperature, said control device makes the amount of NOx discharged from said internal combustion engine larger according to the increased amount of the reducing agent to be supplied per one time from said supply device, than in the case where said predetermined condition is not satisfied, or in the case where the temperature of said NOx selective catalytic reduction catalyst is less than the predetermined temperature.

When the amount of reducing agent to be supplied to the SCR catalyst is larger than the amount of reducing agent able to be adsorbed to the SCR catalyst, there is a fear that an excessive amount of the reducing agent may flow out from the SCR catalyst. Accordingly, when the amount of supply of the reducing agent per one time is made large in the case where the temperature of the SCR catalyst is equal to or higher than the predetermined temperature, there is a fear that an excessive amount of the reducing agent may flow out from the SCR catalyst. On the other hand, when the amount of NOx discharged from the internal combustion engine is made to increase according to the increasing amount of supply of the reducing agent, the amount of consumption of the reducing agent in the SCR catalyst can be increased, thus making it possible to decrease the excessive amount of the reducing agent. As a result of this, it is possible to decrease the amount of reducing agent flowing out from the SCR catalyst.

In the case where said predetermined condition is satisfied, and in the case where the temperature of said NOx selective catalytic reduction catalyst is less than the predetermined temperature, said control device can make the interval of supply of the reducing agent to be supplied from said supply device longer according to said increased amount of the reducing agent to be supplied per one time.

If the reducing agent is adsorbed to the SCR catalyst even when the amount of supply of the reducing agent per one time has been increased, the interval of supply of the reducing agent can be made long. Here, even if the amount of supply of the reducing agent and the interval of supply of the reducing agent are made to change within a range in which the reducing agent is able to be adsorbed to the SCR catalyst, the rate of NOx reduction will not substantially change, as long as the same amount of the reducing agent as a whole is supplied. For this reason, even if the interval of supply of the reducing agent is increased in accordance with an increase in the amount of supply of the reducing agent per one time, it is possible to maintain the rate of NOx reduction as high as it is.

In the case where the temperature of said NOx selective catalytic reduction catalyst is equal to or higher than the predetermined temperature, said control device can make the interval of supply of the reducing agent constant irrespective of whether said predetermined condition is satisfied.

In the case where the temperature of the SCR catalyst is equal to or higher than the predetermined temperature, the amount of reducing agent able to be adsorbed by the SCR catalyst is small, and hence, even if the amount of supply of the reducing agent is increased, the amount of reducing agent to be adsorbed to the SCR catalyst does not increase. For this reason, when the interval of supply of the reducing agent is made long at the time the amount of supply of the reducing agent is increased, a shortage of the reducing agent will be caused. In contrast to this, if the interval of supply of the reducing agent is not changed, even though the amount of supply of the reducing agent is increased, it is possible to suppress the reducing agent from running short. As a result of this, it is possible to suppress a decrease in the rate of NOx reduction.

### [EFFECT OF THE INVENTION]

According to the present invention, it is possible to decrease the amount of the PM adhered to the reducing agent addition valve, while suppressing the decrease in the rate of NOx reduction.

### [BRIEF DESCRIPTION OF THE DRAWINGS]

[Fig. 1] is a view showing the schematic construction of intake and exhaust systems of an internal combustion engine according to an embodiment of the present invention.
[Fig. 2] is a view showing the relation between an instruction value of an amount of supply of a reducing agent, and an actual amount of supply of the reducing agent.
[Fig. 3] is a view when PM has adhered to the vicinity of a nozzle hole in a reducing agent addition valve.
[Fig. 4] is a time chart showing changes over time of the amount of supply of the reducing agent and the concentration of NOx in cases where the temperature of an SCRF is low (e.g., equal to or lower than 250 degrees C).
[Fig. 5] is a time chart showing changes over time of the amount of supply of the reducing agent and the concentration of NOx in cases where the temperature of the SCRF is high (e.g., equal to or higher than 250 degrees C, in particular, equal to or higher than 400 degrees C).
[Fig. 6] is a time chart showing changes over time of the temperature of an SCR catalyst, the amount of PM adhered to the reducing agent addition valve (i.e., the amount of adhesion of PM), and the amount of supply of the reducing agent, in cases where the temperature of the SCR catalyst is less than a predetermined temperature.
[Fig. 7] is a time chart showing changes over time of the temperature of the SCR catalyst, the amount of PM adhered to the reducing agent addition valve (i.e., the amount of adhesion of PM), the amount of supply of the reducing agent, and the amount of NOx discharge from the internal combustion engine, in cases where the temperature of the SCR catalyst is equal to or higher than the predetermined temperature.
[Fig. 8] is a flow chart showing a flow for decreasing the amount of adhesion of PM in the reducing agent addition valve according to the embodiment.
[Fig. 9] is a view showing the relation between an amount of PM discharge Msoot from the internal combustion engine, and an amount of change Δ Qd of an adhesion amount determination value Qd.
[Fig. 10] is a view showing the relation between an amount of intake air Ga in the internal combustion engine, and the amount of change Δ Qd of the adhesion amount determination value Qd.
[Fig. 11] is a view showing the relation between the temperature of exhaust gas Tex in the internal combustion engine, and the amount of change Δ Qd of the adhesion amount determination value Qd.
[Fig. 12] is a view showing the relation between the amount of supply of the reducing agent Qad, and the amount of change Δ Qd of the adhesion amount determination value Qd.
[Fig. 13] is a view showing the relation between the interval of supply of the reducing agent Fad, and the amount of change Δ Qd of the adhesion amount determination value Qd.

### [MODE FOR CARRYING OUT THE INVENTION]

Hereinafter, a mode for carrying out the present invention will be exemplarily described in detail based on an embodiment with reference to the attached drawings. However, the dimensions, materials, shapes, relative arrangements and so on of component parts described in the embodiment are not intended to limit the scope of the present invention to these alone in particular as long as there are no specific statements.

### (Embodiment)

Here, description will be made by taking as an example a case in which an exhaust gas purification apparatus for an internal combustion engine according to the present invention is applied to a diesel engine for driving a vehicle. However, it is to be noted that the internal combustion engine according to the present invention is not limited to a diesel engine, but may be a gasoline engine, etc.

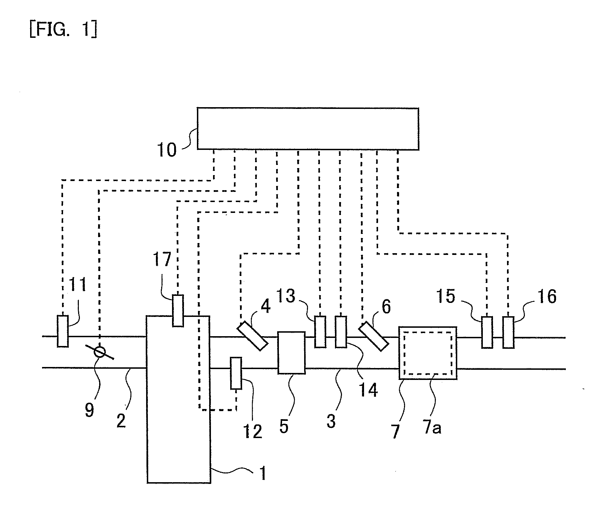

Fig. 1 is a view showing the schematic construction of intake and exhaust systems of an internal combustion engine according to an embodiment. The internal combustion engine 1 is a diesel engine for driving a vehicle. An intake passage 2 and an exhaust passage 3 are connected to the internal combustion engine 1. In the intake passage 2, there are arranged an air flow meter 11 and a throttle valve 9 sequentially from an upstream side along a flow of exhaust gas. The air flow meter 11 serves to detect an amount of intake air sucked into the internal combustion engine 1. The throttle valve 9 serves to adjust the amount of intake air sucked into the internal combustion engine 1.

In the exhaust passage 3, there are arranged a first exhaust gas temperature sensor 12, a fuel addition valve 4, a pre-stage catalyst 5, a first NOx sensor 13, a second exhaust gas temperature sensor 14, a reducing agent addition valve 6, an SCRF 7, a second NOx sensor 15, and a third exhaust gas temperature sensor 16, sequentially from the upstream side along the flow of the exhaust gas.

The pre-stage catalyst 5 is an oxidation catalyst. However, the pre-stage catalyst 5 may be a catalyst other than the oxidation catalyst, as long as it has an oxidation function. The pre-stage catalyst 5 may be a three-way catalyst, for example. In order to supply fuel to the pre-stage catalyst 5, the fuel addition valve 4 adds fuel (HC) into the exhaust gas.

The SCRF 7 is constructed such that an SCR catalyst 7a is supported by a wall flow type filter which serves to trap particulate matter (PM) in the exhaust gas. The SCR catalyst 7a adsorbs ammonia, and reduces the NOx in the exhaust gas by using the ammonia as a reducing agent. Here, note that the SCRF 7 is used in this embodiment, but the filter and the SCR catalyst can also be arranged separately from each other. In cases where the filter and the SCR catalyst are arranged separately from each other, either one of which may be arranged at the upstream side of the other. Moreover, in place of the SCRF 7, there may be provided an SCR catalyst 7a which does not have the function of the filter.

The reducing agent addition valve 6 supplies ammonia into the exhaust gas so as to supply the ammonia as a reducing agent to the SCR catalyst 7a. Here, note that a precursor of ammonia may be supplied, in place of ammonia. As the precursor of ammonia, there can be mentioned urea, for example. When urea is hydrolyzed by the heat of the exhaust gas, ammonia is generated. The ammonia or the precursor thereof may be supplied in any state of gas, liquid or solid. A part of the ammonia is adsorbed to the SCR catalyst 7a. Then, the NOx in the exhaust gas is reduced by means of the ammonia, which has been adsorbed by the SCR catalyst 7a and which acts as a reducing agent. Here, note that in this embodiment, the reducing agent addition valve 6 corresponds to a supply device in the present invention.

The first exhaust gas temperature sensor 12, the second exhaust gas temperature sensor 14, and the third exhaust gas temperature sensor 16 are each a sensor for detecting the temperature of exhaust gas. The first exhaust gas temperature sensor 12 detects the temperature of the exhaust gas which flows out from the internal combustion engine 1 or detects the temperature of the exhaust gas which flows into the pre-stage catalyst 5. The second exhaust gas temperature sensor 14 detects the temperature of the exhaust gas which flows out from the pre-stage catalyst 5 or detects the temperature of the exhaust gas which flows into the SCRF 7. The third exhaust gas temperature sensor 16 detects the temperature of the exhaust gas which flows out from the SCR catalyst 7a. The first NOx sensor 13 and the second NOx sensor 15 are each a sensor for detecting the concentration of NOx in the exhaust gas. The first NOx sensor 13 detects the concentration of NOx in the exhaust gas flowing into the SCRF 7. The second NOx sensor 15 detects the concentration of NOx in the exhaust gas flowing out from the SCR catalyst 7a. All of these sensors are not necessarily required, but some of them can be provided as appropriate.

On each of cylinders of the internal combustion engine 1, there is mounted a fuel injection valve 17 for directly injecting fuel into a corresponding cylinder.

An electronic control unit (ECU) 10 is provided in combination with the internal combustion engine 1. The ECU 10 is electrically connected to a variety of kinds of sensors such as the air flow meter 11, the first exhaust gas temperature sensor 12, the first NOx sensor 13, the second exhaust gas temperature sensor 14, the second NOx sensor 15, the third exhaust gas temperature sensor 16, and so on. Then, output signals of these various kinds of sensors are inputted to the ECU 10. Further, the ECU 10 estimates the temperature of the pre-stage catalyst 5 based on the output value of the first exhaust gas temperature sensor 12, and the temperature of the SCRF 7 (i.e., the temperature of the SCR catalyst 7a) based on the output value of the second exhaust gas temperature sensor 14. Here, note that the temperature of the pre-stage catalyst 5 can also be estimated based on the output value of the second exhaust gas temperature sensor 14. Moreover, the temperature of the SCRF 7 can also be estimated based on the output value of the third exhaust gas temperature sensor 16. The rate of NOx reduction in the SCR catalyst 7a can also be calculated based on the output values of the first NOx sensor 13 and the second NOx sensor 15.

Further, the fuel addition valve 4, the reducing agent addition valve 6, the throttle valve 9 and the fuel injection valve 17 are electrically connected to the ECU 10. Then, these parts are controlled by means of the ECU 10. Here, note that in this embodiment, the ECU 10 corresponds to a control device in the present invention.

Here, the reducing agent addition valve 6 is arranged at the upstream side of the SCRF 7, so a large amount of PM is contained in the exhaust gas around the reducing agent addition valve 6. When the PM adheres to the vicinity of a nozzle hole in the reducing agent addition valve 6, the amount of reducing agent to be injected per unit time from the reducing agent addition valve 6 can decrease. Here, note that in the following, unless otherwise mentioned in particular, in the case where it is said that PM adheres to the reducing agent addition valve 6, it is assumed to include PM adhering to the vicinity of the nozzle hole in the reducing agent addition valve 6.

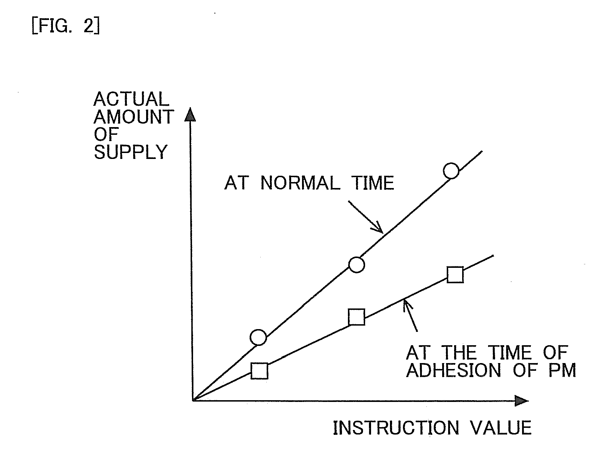

Fig. 2 is a view showing the relation between an instruction value of an amount of supply of the reducing agent, and an actual amount of supply of the reducing agent. The instruction value is an amount of supply of the reducing agent calculated by the ECU 10, and can be set as a target value of the amount of supply of the reducing agent. "AT NORMAL TIME" represents the case where PM has not adhered to the reducing agent addition valve 6, and "AT THE TIME OF ADHESION OF PM" represents the case where PM has adhered to the reducing agent addition valve 6. When PM adheres to the reducing agent addition valve 6, the amount of supply per unit time of the reducing agent decreases, so that the actual amount of supply of the reducing agent becomes smaller with respect to the instruction value of the amount of supply of the reducing agent. For this reason, there is a fear that the reducing agent may run short in the SCR catalyst 7a.

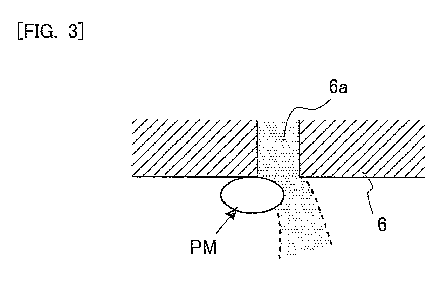

Fig. 3 is a view when PM has adhered to the vicinity of a nozzle hole 6a in the reducing agent addition valve 6. Thus, when PM adheres to the vicinity of the nozzle hole 6a, it becomes difficult for the reducing agent to flow therethrough, so that the amount of reducing agent passing through the the nozzle hole 6a per unit time will decrease. For example, in cases where the amount of PM discharge from the internal combustion engine 1 is large, or in cases where the amount of supply of the reducing agent from the reducing agent addition valve 6 is small, it becomes easy for PM to adhere to the reducing agent addition valve 6.

Here, when the amount of supply of the reducing agent from the reducing agent addition valve 6 is large, the PM adhered to the reducing agent addition valve 6 can be removed. Here, note that to make the amount of supply of the reducing agent large includes increasing the amount of supply of the reducing agent per unit time by making the pressure of the reducing agent higher, or increasing the amount of supply of the reducing agent by making the supply period of time of the reducing agent longer. Here, the larger the amount of supply of the reducing agent per one time, the larger becomes the effect of removing the PM from the reducing agent addition valve 6.

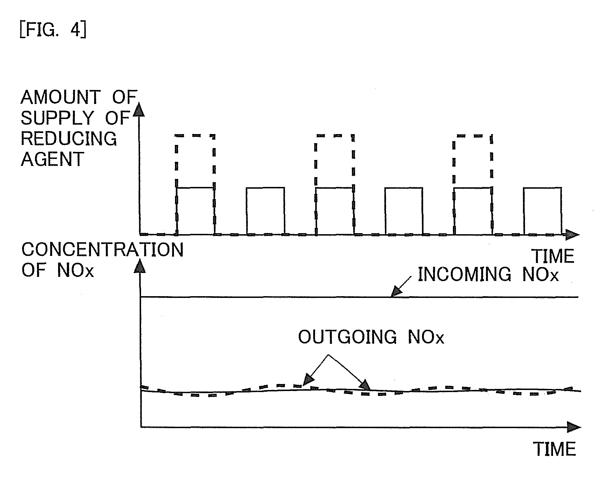

Accordingly, in this embodiment, the PM is removed from the reducing agent addition valve 6 by increasing the amount of supply of the reducing agent from the reducing agent addition valve 6. Fig. 4 is a time chart showing changes over time of the amount of supply of the reducing agent and the concentration of NOx in cases where the temperature of the SCRF 7 is low (e.g., equal to or lower than 250 degrees C). A solid line indicates the case where the amount of supply of the reducing agent from the reducing agent addition valve 6 is not caused to increase, and a broken line shows the case where the amount of supply of the reducing agent from the reducing agent addition valve 6 is caused to increase. Here, note that the solid line may also be the case where the ordinary supply of the reducing agent from the reducing agent addition valve 6 is carried out.

The ordinary supply of the reducing agent is the supply of the reducing agent except when PM is removed from the reducing agent addition valve 6. The amount of supply of the reducing agent per one time at the time of the ordinary supply of the reducing agent and the interval of supply of the reducing agent at the time of the ordinary supply of the reducing agent are decided in such a manner that even in the case where the temperature of the SCR catalyst 7a is high, the reducing agent is adsorbed to the SCR catalyst 7a and the rate of NOx reduction falls within an allowable range. For this reason, at the time of the ordinary supply of the reducing agent, the amount of supply of the reducing agent per one time is relatively small, and the interval of supply of the reducing agent is relatively short.

In Fig. 4, "INCOMING NOx" indicates the concentration of NOx in the exhaust gas flowing into the SCRF 7, and "OUTGOING NOx" indicates the concentration of NOx in the exhaust gas flowing out from the SCRF 7. In Fig. 4, in the case of the broken line, the amount of supply of the reducing agent per one time is twice, and the interval of supply of the reducing agent is also twice, as compared with the case of the solid line. For this reason, the total amount of the amount of supply of the reducing agent in the case of the solid line in which the supply of the reducing agent is carried out two times is the same as that in the case of the broken line in which the supply of the reducing agent is carried out one time, in the same period of time. In the case of the solid line, and in the case of the broken line, the amount of the outgoing NOx does not substantially change, so the rate of NOx reduction does not substantially change, either.

Here, in the case where the temperature of the SCR catalyst 7a is low, the reducing agent is adsorbed to the SCR catalyst 7a, even when the amount of supply of the reducing agent per one time and the interval of supply of the reducing agent are made twice with respect to the amount of the ordinary supply of the reducing agent. This is because the amount of supply of the reducing agent per one time and the interval of supply of the reducing agent at the time of the ordinary supply of the reducing agent are decided in such a manner that even in the case where the temperature of the SCR catalyst 7a is high, the reducing agent is adsorbed to the SCR catalyst 7a. That is, in usual, the amount of supply of the reducing agent per one time is set to be relatively small, and the interval of supply of the reducing agent is set to be relatively short, so that even in the case where the temperature of the SCR catalyst 7a is high, the reducing agent can be adsorbed to the SCR catalyst 7a. In that case, in the case where the temperature of the SCR catalyst 7a is low, the amount of supply of the reducing agent is small with respect to the amount of reducing agent able to be adsorbed, and hence, even if the amount of supply of the reducing agent is caused to increase, there is room for the reducing agent to be further adsorbed. Accordingly, even if the amount of supply of the reducing agent per one time and the interval of supply of the reducing agent are caused to increase, it is possible to suppress the reducing agent from flowing out from the SCR catalyst 7a. In contrast to this, when the temperature of the SCR catalyst 7a becomes high, the amount of reducing agent able to be adsorbed decreases.

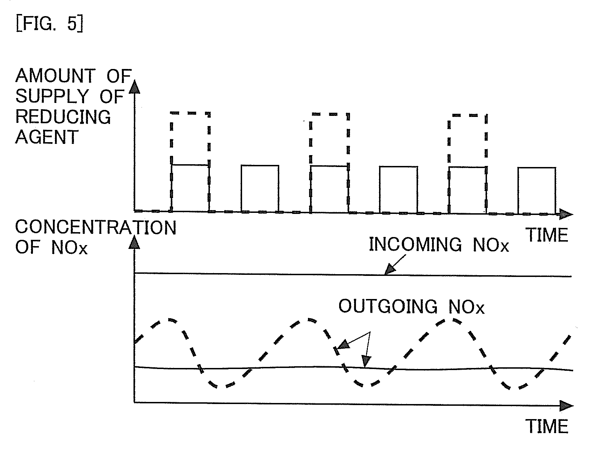

Fig. 5 is a time chart showing changes over time of the amount of supply of the reducing agent and the concentration of NOx in cases where the temperature of the SCRF 7 is high (e.g., equal to or higher than 250 degrees C, in particular, equal to or higher than 400 degrees C). A solid line and a broken line are used with the same meaning as in Fig. 4. In the case where the temperature of the SCR catalyst 7a is high, when the amount of supply of the reducing agent per one time and the interval of supply of the reducing agent are doubled, a part of the reducing agent flows out from the SCR catalyst 7a, without being adsorbed to the SCR catalyst 7a. For this reason, the reducing agent runs short in the SCR catalyst 7a, so that the rate of NOx reduction becomes low. That is, in Fig. 5, the outgoing NOx may increase. In addition, at the time of supplying the reducing agent, and immediately after that, the rate of NOx reduction becomes high due to an oversupply of the reducing agent. Accordingly, in the case where the temperature of the SCR catalyst 7a is high, when the interval of supply of the reducing agent is made longer at the time of increasing the amount of supply of the reducing agent per one time in order to remove the PM from the reducing agent addition valve 6, there will be a fear that the rate of NOx reduction may become low.

Accordingly, in this embodiment, in cases where the PM is removed from the reducing agent addition valve 6, when the temperature of the SCRF 7 (i.e., the temperature of the SCR catalyst 7a) is less than a predetermined temperature, the amount of supply of the reducing agent per one time from the reducing agent addition valve 6 is made larger than that in the ordinary supply of the reducing agent, and the interval of supply of the reducing agent is made longer than that in the ordinary supply of the reducing agent. On the other hand, when the temperature of the SCRF 7 (i.e., the temperature of the SCR catalyst 7a) is equal to or higher than the predetermined temperature, the amount of supply of the reducing agent per one time from the reducing agent addition valve 6 is made larger than that in the ordinary supply of the reducing agent, but the interval of supply of the reducing agent is made the same as that in the ordinary supply of the reducing agent. That is, in the case where the PM is removed from the reducing agent addition valve 6, the amount of supply of the reducing agent per one time is made to increase from that in the case where the PM is not removed from the reducing agent addition valve 6. Moreover, in the case where the PM is removed from the reducing agent addition valve 6, when the temperature of the SCRF 7 is less than the predetermined temperature, the interval of supply of the reducing agent is made longer than that when the temperature of the SCR catalyst 7a is equal to or higher than the predetermined temperature. The interval of supply of the reducing agent is may also be set as a period of time from the end of the current supply of the reducing agent to the start of the next supply of the reducing agent, or may also set as a period of time from the start of the current supply of the reducing agent to the start of the next supply of the reducing agent. Here, note that in Fig. 4 and Fig. 5, the amount of supply of the reducing agent per one time or the interval of supply of the reducing agent is set to be twice with respect to that in the ordinary supply of the reducing agent, but the amount of supply of the reducing agent can be made to increase arbitrarily, as long as it is within a range in which the reducing agent can be adsorbed to the SCR catalyst 7a when the temperature of the SCR catalyst 7a is low. In this case, it is only necessary to change the interval of supply of the reducing agent according to the amount of supply of the reducing agent so that the total amount of the amount of supply of the reducing agent in the predetermined period of time is not changed.

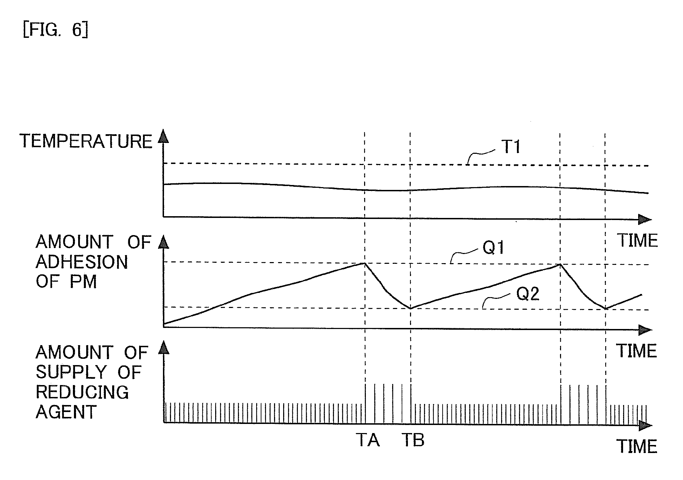

Fig. 6 is a time chart showing changes over time of the temperature of the SCR catalyst 7a, the amount of PM adhered to the reducing agent addition valve 6 (i.e., the amount of adhesion of PM), and the amount of supply of the reducing agent, in cases where the temperature of the SCR catalyst 7a is less than a predetermined temperature T1. The predetermined temperature T1 is a lower limit value of a temperature at which when the amount of supply of the reducing agent per one time and the interval of supply of the reducing agent are made large, there will be a fear that the rate of NOx reduction may decrease or become low. That is, when the temperature of the SCR catalyst 7a is less than the predetermined temperature T1, the amount of supply of the reducing agent per one time and the interval of supply of the reducing agent can be made large. A start threshold value Q1 in the amount of adhesion of the PM is an amount of adhesion of the PM at which the processing of removing the PM adhered to the reducing agent addition valve 6 is started. In addition, an end threshold value Q2 in the amount of adhesion of the PM is an amount of adhesion of the PM at which this processing is ended after the starting of the processing of removing the PM adhered to the reducing agent addition valve 6. That is, when the amount of adhesion of the PM increases to reach the start threshold value Q1 at a time point indicated at TA, the amount of supply of the reducing agent and the interval of supply of the reducing agent are made large, and thereafter, when the amount of adhesion of the PM decreases to reach the end threshold value Q2 at a time point indicated at TB, the amount of supply of the reducing agent and the interval of supply of the reducing agent are returned to the original values, respectively.

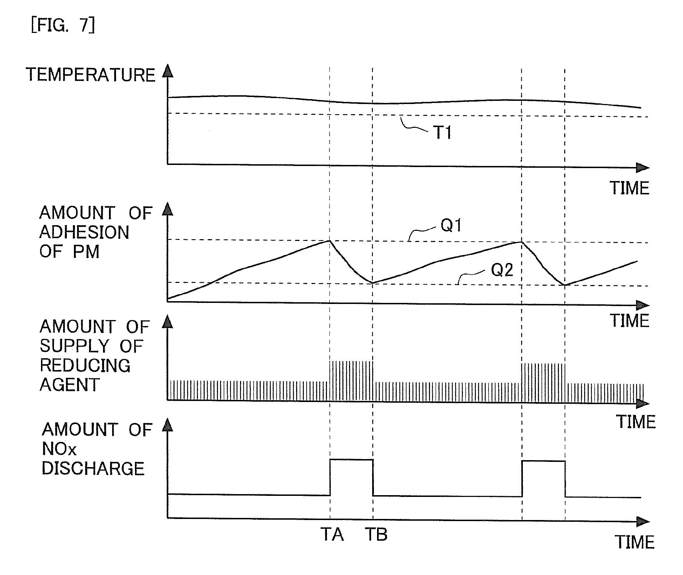

Fig. 7 is a time chart showing changes over time of the temperature of the SCR catalyst 7a, the amount of PM adhered to the reducing agent addition valve 6 (i.e., the amount of adhesion of PM), the amount of supply of the reducing agent, and the amount of NOx discharge from the internal combustion engine 1, in the case where the temperature of the SCR catalyst 7a is equal to or higher than the predetermined temperature. In the case where the temperature of the SCRF 7 (i.e., the temperature of the SCR catalyst 7a) is equal to or higher than the predetermined temperature T1, the amount of supply of the reducing agent from the reducing agent addition valve 6 is made large, but the interval of supply of the reducing agent is made unchanged.

Here, when the amount of supply of the reducing agent per one time is made large, the reducing agent may become surplus in the SCR catalyst 7a, if the interval of supply of the reducing agent is not made long. This excessive amount of the reducing agent may flow out from the SCR catalyst 7a. Accordingly, in this embodiment, in the case where the temperature of the SCR catalyst 7a is equal to or higher than the predetermined temperature, when the amount of supply of the reducing agent per one time is made to increase, the amount of NOx discharge from the internal combustion engine 1 may be made to increase. In this case, the amount of NOx discharge is made to increase according to the excessive (surplus) amount of the reducing agent in the SCR catalyst 7a. That is, by increasing the amount of NOx discharge from the internal combustion engine 1, the excessive amount of the reducing agent in the SCR catalyst 7a is caused to react with the NOx, thereby suppressing the reducing agent from flowing out from the SCR catalyst 7a. Here, note that when the amount of NOx discharge from the internal combustion engine 1 is too large or excessive, the rate of NOx reduction in the SCR catalyst 7a will become low, and hence, the amount of NOx discharge from the internal combustion engine 1 is decided so that the amount of reducing agent flowing out from the SCR catalyst 7a and the rate of NOx reduction in the SCR catalyst 7a fall within allowable ranges, respectively.

In Fig. 7, when the amount of adhesion of the PM increases to reach the start threshold value Q1 at the time point indicated at TA, the amount of supply of the reducing agent per one time is increased and at the same time the amount of NOx discharge from the internal combustion engine 1 is increased, and thereafter, when the amount of adhesion of the PM decreases to reach the end threshold value Q2 at the time point indicated at TB, the amount of supply of the reducing agent and the amount of NOx discharge from the internal combustion engine 1 are returned to the original values, respectively.

In this manner, by increasing the amount of NOx discharge from the internal combustion engine 1 according to the increase in the amount of supply of the reducing agent, it is possible to suppress the reducing agent from flowing out from the SCR catalyst 7a. This amount of NOx discharge reacts with the excessive amount of the reducing agent in the SCR catalyst 7a, so there is also substantially no decrease in the rate of NOx reduction.

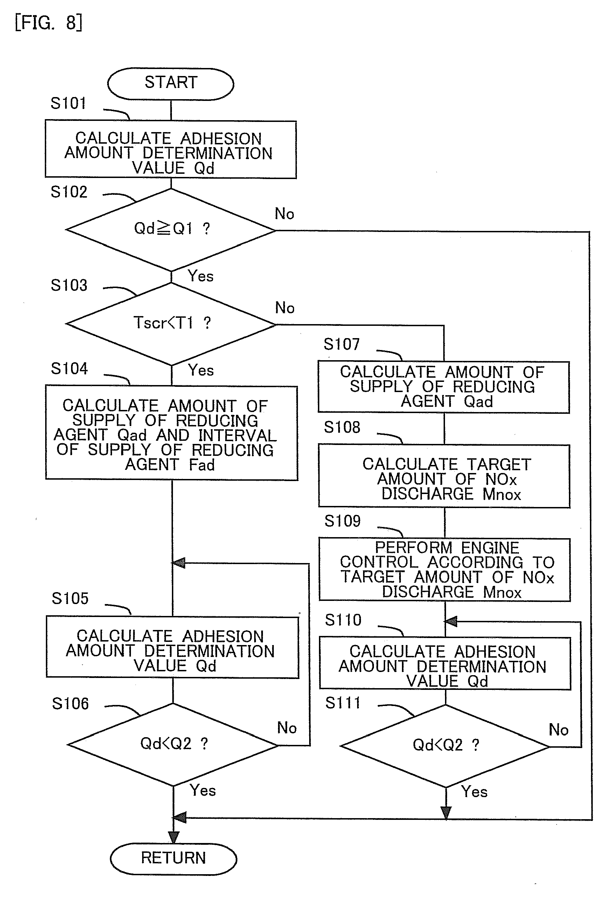

Fig. 8 is a flow chart showing a flow for decreasing the amount of adhesion of the PM in the reducing agent addition valve 6 according to this embodiment. This flow is carried out by means of the ECU 10 at each predetermined time interval.

In step S101, an adhesion amount determination value Qd is calculated. The adhesion amount determination value Qd is a value which is in a correlation with the amount of adhesion of the PM in the reducing agent addition valve 6. Here, note that the adhesion amount determination value Qd may also be the amount of adhesion of the PM itself. The adhesion amount determination value Qd is associated with the amount of PM discharge Msoot from the internal combustion engine 1 per unit time, the amount of intake air Ga sucked into the internal combustion engine 1 per unit time (i.e., this may also be the flow rate of the exhaust gas), and the temperature of the exhaust gas Tex in the internal combustion engine 1, and hence can be obtained from these values. Here, it is assumed that an amount of change Δ Qd of the adhesion amount determination value Qd is a value per unit time.

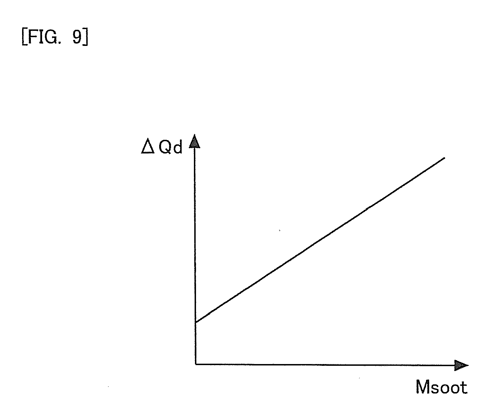

Fig. 9 is a view showing the relation between the amount of PM discharge Msoot from the internal combustion engine 1, and the amount of change Δ Qd of the adhesion amount determination value Qd. The more the amount of PM discharge Msoot from the internal combustion engine 1, the easier it becomes for the PM to adhere to the reducing agent addition valve 6. That is, as shown in Fig. 9, the more the amount of PM discharge Msoot from the internal combustion engine 1, the larger the amount of change Δ Qd of the adhesion amount determination value Qd becomes. This relation can be obtained in advance through experiments, simulations, or the like.

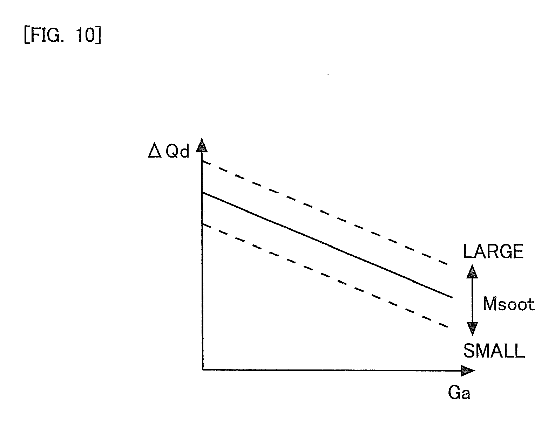

Fig. 10 is a view showing the relation between the amount of intake air Ga in the internal combustion engine 1 and the amount of change Δ Qd of the adhesion amount determination value Qd. In Fig. 10, there is also shown the relation between the amount of intake air Ga in the internal combustion engine 1 and the amount of change Δ Qd of the adhesion amount determination value Qd, in the case where the amount of PM discharge Msoot from the internal combustion engine 1 has changed. The more the amount of intake air Ga, the lower the concentration of PM in the exhaust gas becomes, so the more difficult it becomes for the PM to adhere to the reducing agent addition valve 6. That is, as shown in Fig. 10, the more the amount of intake air Ga in the internal combustion engine 1, the smaller the amount of change Δ Qd of the adhesion amount determination value Qd becomes. Further, the more the amount of PM discharge Msoot from the internal combustion engine 1 becomes, the larger the amount of change Δ Qd of the adhesion amount determination value Qd becomes. This relation can be obtained in advance through experiments, simulations, or the like.

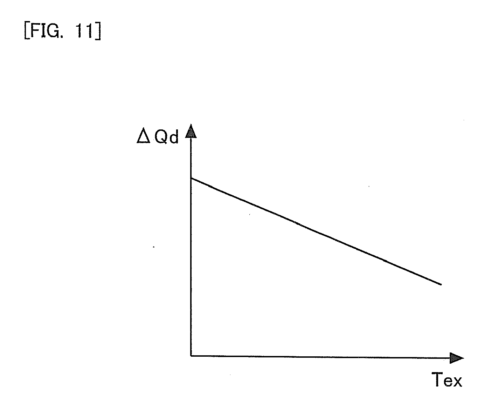

Fig. 11 is a view showing the relation between the temperature of exhaust gas Tex in the internal combustion engine 1, and the amount of change Δ Qd of the adhesion amount determination value Qd. Here, when the temperature of the exhaust gas Tex is high, a part of high boiling point components in the PM evaporates, so that it becomes difficult for the PM to adhere to the reducing agent addition valve 6. On the other hand, when the temperature of the exhaust gas Tex is low, it becomes difficult for the high boiling point components in the PM to evaporate, so that it becomes easy for the PM to adhere to the reducing agent addition valve 6. That is, as shown in Fig. 11, the higher the temperature of the exhaust gas Tex of the internal combustion engine 1 becomes, the smaller the amount of change Δ Qd of the adhesion amount determination value Qd becomes. This relation can be obtained in advance through experiments, simulations, or the like.

The ECU 10 updates the adhesion amount determination value Qd by adding the amount of change Δ Qd to the adhesion amount determination value Qd which is calculated from the above relation.

In step S102, it is determined whether the adhesion amount determination value Qd is equal to or larger than the start threshold value Q1. In this step, it is determined whether it is necessary to remove the PM from the reducing agent addition valve 6. In cases where an affirmative determination is made in step S102, the flow or routine advances to step S103, whereas in cases where a negative determination is made, this routine is ended. Here, note that the case in this embodiment where an affirmative determination is made in step S102 corresponds to "the case where a predetermined condition for decreasing the amount of the particulate matter adhered to the supply device is satisfied" in the present invention, and the case in this embodiment where a negative determination is made in step S102 corresponds to "the case where the predetermined condition is not satisfied" in the present invention.

In step S103, it is determined whether the temperature Tscr of the SCRF 7 is less than the predetermined temperature T1. As mentioned before, the predetermined temperature T1 is the lower limit value of the temperature at which when the amount of supply of the reducing agent per one time and the interval of supply of the reducing agent are made large, there will be a fear that the rate of NOx reduction may decrease or become low. This predetermined temperature T1 is 250 degrees C, for example. That is, in this step, it is determined based on the temperature Tscr of the SCRF 7 whether the amount of supply of the reducing agent per one time can be made to increase, and the interval of supply of the reducing agent can be made long. The predetermined temperature T1 has been obtained in advance through experiments, simulations or the like.

In cases where an affirmative determination is made in step S103, the routine advances to step S104. In step S104, the amount of supply of the reducing agent Qad and the interval of supply of the reducing agent Fad at the time of removing the PM from the reducing agent addition valve 6 are calculated. The amount of supply of the reducing agent Qad is an amount of supply of the reducing agent per one time. The amount of supply of the reducing agent Qad is larger than an amount of supply of the reducing agent in the case where the supply of the reducing agent for removing the PM from the reducing agent addition valve 6 is not carried out (i.e., the amount of the ordinary supply of the reducing agent). The amount of supply of the reducing agent Qad is decided so that the effect of removing the PM falls within an allowable range. Moreover, the amount of supply of the reducing agent Qad calculated in step S104 is made larger than the amount of supply of the reducing agent decided in the ordinary supply of the reducing agent, and the interval of supply of the reducing agent Fad calculated in step S104 is made longer than the interval of supply of the reducing agent decided in the ordinary supply of the reducing agent. Here, note that the lower the temperature of the SCR catalyst 7a, the larger the amount of supply of the reducing agent Qad may be made, and the longer the interval of supply of the reducing agent Fad may also be made. In addition, the amount of supply of the reducing agent Qad and the interval of supply of the reducing agent Fad may be set in such a manner that the rate of NOx reduction does not change from the ordinary supply of the reducing agent. In that case, the total amount of the amount of supply of the reducing agent in the predetermined period of time becomes the same as the total amount of the amount of supply of the reducing agent in the case of assuming that the ordinary supply of the reducing agent has been carried out. Moreover, the amount of supply of the reducing agent Qad and the interval of supply of the reducing agent Fad may be decided in such a manner that the reducing agent can be supplied without excess and deficiency with respect to the amount of NOx discharge from the internal combustion engine 1. These relations may have been decided in advance through experiments, simulations or the like.

In step S105, the adhesion amount determination value Qd is calculated. The amount of adhesion of the PM in the reducing agent addition valve 6 is decreased by the supply of the reducing agent. In this step, the adhesion amount determination value Qd after the amount of adhesion of the PM has been decreased is calculated. For this reason, in this step, first, the amount of change Δ Qd of the adhesion amount determination value Qd is calculated. This amount of change Δ Qd is a negative value.

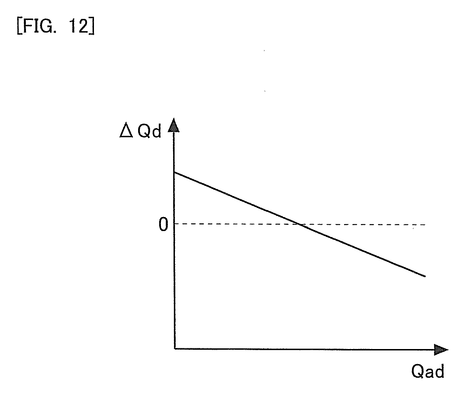

Fig. 12 is a view showing the relation between the amount of supply of the reducing agent Qad per one time, and the amount of change Δ Qd of the adhesion amount determination value Qd. Here, the larger the amount of supply of the reducing agent Qad per one time, the larger becomes the effect of removing the PM from the reducing agent addition valve 6. That is, the larger the amount of supply of the reducing agent Qad per one time, the smaller the amount of change Δ Qd of the adhesion amount determination value Qd becomes. Then, when the amount of supply of the reducing agent Qad per one time increases to a certain extent, the amount of change Δ Qd of the adhesion amount determination value Qd becomes a negative value. That is, when the amount of supply of the reducing agent Qad increases or becomes large, the adhesion amount determination value Qd decreases in a gradual manner. Then, the fact that the amount of change Δ Qd of the adhesion amount determination value Qd becomes a negative value means a decrease in the amount of adhesion of the PM. This relation can be obtained in advance through experiments, simulations, or the like.

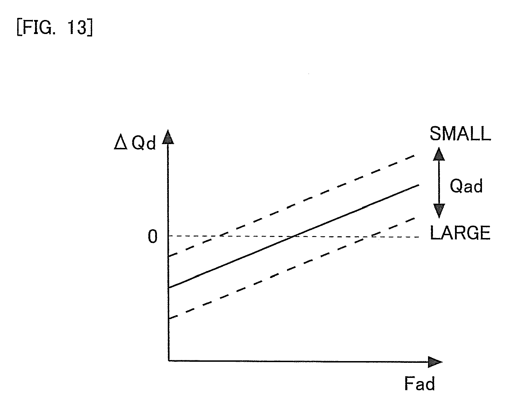

Fig. 13 is a view showing the relation between the interval of supply of the reducing agent Fad, and the amount of change Δ Qd of the adhesion amount determination value Qd. In Fig. 13, there is also shown the relation between the interval of supply of the reducing agent Fad and the amount of change Δ Qd of the adhesion amount determination value Qd, in the case where the amount of supply of the reducing agent Qad per one time has changed. The shorter the interval of supply of the reducing agent Fad, the larger the effect of removing the PM becomes. That is, as shown in Fig. 13, the shorter the interval of supply of the reducing agent becomes, the smaller the amount of change Δ Qd of the adhesion amount determination value Qd becomes. Then, when the interval of supply of the reducing agent Fad becomes shorter to a certain extent, the amount of change Δ Qd of the adhesion amount determination value Qd becomes a negative value. This relation can be obtained in advance through experiments, simulations, or the like. The ECU 10 updates the adhesion amount determination value Qd by adding the amount of change Δ Qd to the adhesion amount determination value Qd which is calculated from the above relation.

In step S106, it is determined whether the adhesion amount determination value Qd is less than the end threshold value Q2. In this step, it is determined whether the removal of the PM from the reducing agent addition valve 6 has been completed. Here, note that in this step S106, instead of determining whether the adhesion amount determination value Qd is less than the end threshold value Q2, it may be determined whether the adhesion amount determination value Qd is equal to or smaller than the end threshold value Q2. In cases where an affirmative determination is made in step S106, this routine is ended, whereas in cases where a negative determination is made, the routine returns to step S105.

On the other hand, in cases where a negative determination is made in step S103, the routine advances to step S107. In step S107, the amount of supply of the reducing agent Qad per one time is calculated. Here, note that the interval of supply of the reducing agent is not changed from the ordinary supply of the reducing agent. The amount of supply of the reducing agent Qad per one time is set as a value in which the PM can be removed from the reducing agent addition valve 6. The amount of supply of the reducing agent Qad per one time may also be the same value as the amount of supply of the reducing agent Qad which is calculated in step S104.

In step S108, a target amount of NOx discharge Mnox is calculated. The target amount of NOx discharge Mnox is an amount of NOx which is made to discharge from the internal combustion engine 1 per unit time, at the time of removing the PM from the reducing agent addition valve 6. The target amount of NOx discharge Mnox is an amount of NOx which is removed or reduced by the amount of supply of the reducing agent Qad calculated in step S107. That is, by adjusting the amount of supply of the reducing agent to the amount of supply of the reducing agent Qad calculated in step S107 when the amount of NOx discharged from the internal combustion engine 1 becomes the target amount of NOx discharge Mnox, it is possible to supply the reducing agent without excess and deficiency with respect to the amount of NOx discharge. The relation between the amount of supply of the reducing agent Qad and the target amount of NOx discharge Mnox can be obtained in advance by experiments, simulations, or the like.

In step S109, the internal combustion engine 1 is controlled according to the target amount of NOx discharge Mnox. The amount of NOx discharge from the internal combustion engine 1 changes according to the degree of opening of the throttle valve 9. In addition, in cases where provision is made for an EGR device, the amount of NOx discharge changes according to the degree of opening of the EGR valve, too. Moreover, in cases where provision is made for a turbocharger having a turbo valve, the amount of NOx discharge changes according to the degree of opening of the turbo valve, too. Accordingly, the amount of NOx discharge from the internal combustion engine 1 can be controlled by adjusting the degree of opening of the throttle valve 9, the degree of opening of the EGR valve, the degree of opening of the turbo valve, or the like. Here, note that the amount of NOx discharge from the internal combustion engine 1 changes according to the operating state of the internal combustion engine 1 (e.g., the number of engine revolutions per unit time Ne, the amount of fuel injection Qf). By obtaining in advance the degree of opening of the throttle valve 9, etc., which becomes the target amount of NOx discharge Mnox, according to the operating state of the internal combustion engine 1, by means of experiments, simulations, or the like, it is possible to obtain, according to the operating state of the internal combustion engine 1 and the target amount of NOx discharge Mnox, the degree of opening of the throttle valve 9, etc., with which the amount of NOx discharge from the internal combustion engine 1 becomes the target amount of NOx discharge Mnox. A well-known technology can also be used for the control to adjust the amount of NOx discharge to the target amount of NOx discharge Mnox.

In step S110, the adhesion amount determination value Qd is calculated, similarly to step S105.

In step S111, it is determined whether the adhesion amount determination value Qd is less than the end threshold value Q2, similarly to step S106. In cases where an affirmative determination is made in step S111, the routine is ended, whereas in cases where a negative determination is made, the routine returns to step S110.

As described above, according to this embodiment, it is possible to decrease the amount of the PM adhered to the reducing agent addition valve 6, while suppressing the decrease of the NOx removal or reduction rate, by adjusting the amount of supply of the reducing agent and the interval of supply of the reducing agent according to the temperature of the SCRF 7, i.e., the temperature of the SCR catalyst 7a.

### [EXPLANATION OF REFERENCE NUMERALS AND CHARACTERS]

- 1: internal combustion engine
- 2: intake passage
- 3: exhaust passage
- 4: fuel addition valve
- 5: pre-stage catalyst
- 6: reducing agent addition valve
- 7: SCRF
- 7a: SCR catalyst
- 9: throttle valve
- 10: ECU
- 11: air flow meter

## Claims

1. An exhaust gas purification apparatus for an internal combustion engine (1), comprising:
an NOx selective catalytic reduction catalyst (7a) configured to be arranged in an exhaust passage (3) of the internal combustion engine (1) for selectively reducing NOx in an exhaust gas by using ammonia as a reducing agent; and
a supply device (6) for supplying the reducing agent into the exhaust passage (3) at a location upstream of said NOx selective catalytic reduction catalyst (7a);
and **characterized by** comprising also a control device (10) comprising control means adapted to perform a control in such a manner that an amount of the reducing agent supplied from said supply device per one time is made larger in the case where a predetermined condition for decreasing an amount of particulate matter adhered to said supply device (6) is satisfied, than in the case where the predetermined condition is not satisfied, and that in the case where said predetermined condition is satisfied, an interval of supply of the reducing agent from said supply device is made longer in the case where the temperature of said NOx selective catalytic reduction catalyst (7a) is less than a predetermined temperature, than in the case where the temperature of said NOx selective catalytic reduction catalyst (7a) is equal to or higher than the predetermined temperature, and in such a manner that in the case where said predetermined condition is satisfied, and in the case where the temperature of said NOx selective catalytic reduction catalyst (7a) is equal to or higher than the predetermined temperature, the amount of NOx discharged from said internal combustion engine (1) is made larger according to the increased amount of the reducing agent to be supplied per one time from said supply device, than in the case where said predetermined condition is not satisfied, or in the case where the temperature of said NOx selective catalytic reduction catalyst (7a) is less than the predetermined temperature.

2. The exhaust gas purification apparatus for an internal combustion engine (1) as set forth in claim 1, wherein said control means are adapted to perform a control such that
in the case where said predetermined condition is satisfied, and in the case where the temperature of said NOx selective catalytic reduction catalyst (7a) is less than the predetermined temperature, the interval of supply of the reducing agent to be supplied from said supply device (6) is made longer according to said increased amount of the reducing agent to be supplied per one time.

3. The exhaust gas purification apparatus for an internal combustion engine (1) as set forth in claim 1, wherein said control means are adapted to perform a control such that
in the case where the temperature of said NOx selective catalytic reduction catalyst (7a) is equal to or higher than the predetermined temperature, said control device makes the interval of supply of the reducing agent constant, irrespective of whether said predetermined condition is satisfied.

## Patentansprüche

1. Abgasreinigungsvorrichtung für einen Verbrennungsmotor (1), umfassend:
einen Katalysator (7a) für selektive katalytische NOx-Reduktion, der dazu ausgebildet ist, in einem Abgaskanal (3) des Verbrennungsmotors (1) angeordnet zu werden, zum selektiven Reduzieren von NOx in einem Abgas durch Verwendung von Ammoniak als Reduktionsmittel, und
eine Zufuhrvorrichtung (6) zum Zuführen des Reduktionsmittels in den Abgaskanal (3) an einer dem Katalysator (7a) für selektive katalytische NOx-Reduktion vorgelagerten Position,
und **dadurch gekennzeichnet, dass** sie auch eine Steuerungsvorrichtung (10) umfasst, die Steuerungsmittel umfasst, die dazu ausgebildet sind, eine Steuerung durchzuführen auf derartige Weise, dass eine Menge des Reduktionsmittels, das von der Zufuhrvorrichtung pro Zeiteinheit zugeführt wird, in dem Fall, in dem eine vorab festgelegte Bedingung zum Senken einer Partikelmenge, die an der Zufuhrvorrichtung (6) anhaftet, erfüllt ist, größer gemacht wird als in dem Fall, in dem die vorab festgelegte Bedingung nicht erfüllt ist, und dass in dem Fall, in dem die vorab festgelegte Bedingung erfüllt ist, ein Intervall der Zufuhr des Reduktionsmittels von der Zufuhrvorrichtung in dem Fall, in dem die Temperatur des Katalysators (7a) für selektive katalytische NOx-Reduktion kleiner als eine vorab festgelegte Temperatur ist, länger gemacht wird als in dem Fall, in dem die Temperatur des Katalysators (7a) für selektive katalytische NOx-Reduktion größer gleich der vorab festgelegten Temperatur ist, und auf derartige Weise, dass in dem Fall, in dem die vorab festgelegte Bedingung erfüllt ist, und in dem Fall, in dem die Temperatur des Katalysators (7a) für selektive katalytische NOx-Reduktion größer gleich der vorab festgelegten Temperatur ist, die Menge von NOx, die aus dem Verbrennungsmotor (1) abgegeben wird, entsprechend der erhöhten Menge an Reduktionsmittel, die pro Zeiteinheit von der Zufuhrvorrichtung zuzuführen ist, größer gemacht wird als in dem Fall, in dem die vorab festgelegte Bedingung nicht erfüllt ist, oder in dem Fall, in dem die Temperatur des Katalysators (7a) für selektive katalytische NOx-Reduktion kleiner als die vorab festgelegte Temperatur ist.

2. Abgasreinigungsvorrichtung für einen Verbrennungsmotor (1) nach Anspruch 1, wobei die Steuerungsmittel dazu ausgebildet sind, eine Steuerung derart durchzuführen, dass,
in dem Fall, in dem die vorab festgelegte Bedingung erfüllt ist, und in dem Fall, in dem die Temperatur des Katalysators (7a) für selektive katalytische NOx-Reduktion kleiner als die vorab festgelegte Temperatur ist, das Zufuhrintervall des Reduktionsmittels, das von der Zufuhrvorrichtung (6) zuzuführen ist, entsprechend der erhöhten Menge des pro Zeiteinheit zuzuführenden Reduktionsmittels länger gemacht wird.

3. Abgasreinigungsvorrichtung für einen Verbrennungsmotor (1) nach Anspruch 1, wobei die Steuerungsmittel dazu ausgebildet sind, eine Steuerung derart durchzuführen, dass,
in dem Fall, in dem die Temperatur des Katalysators (7a) für selektive katalytische NOx-Reduktion größer gleich der vorab festgelegten Temperatur ist, die Steuerungsvorrichtung das Zufuhrintervall des Reduktionsmittels konstant macht, unabhängig davon, ob die vorab festgelegte Bedingung erfüllt ist.

## Revendications

1. Appareil de purification de gaz d'échappement pour un moteur à combustion interne (1), comportant :
un catalyseur de réduction catalytique sélective de NOₓ (7a) configuré pour être disposé dans un passage d'échappement (3) du moteur à combustion interne (1) pour réduire de manière sélective le NOₓ dans un gaz d'échappement en utilisant de l'ammoniac comme agent de réduction ; et
un dispositif d'alimentation (6) destiné à délivrer l'agent de réduction dans le passage d'échappement (3) dans un emplacement en amont dudit catalyseur de réduction catalytique sélective de NOₓ (7a) ;
et **caractérisé en ce qu'**il comporte également un dispositif de commande (10) comportant des moyens de commande prévus pour réaliser une commande d'une manière telle qu'une quantité de l'agent de réduction délivré à partir dudit dispositif d'alimentation par unité de temps est rendue plus grande dans le cas où une condition prédéterminée pour diminuer une quantité de matière en particules ayant adhéré sur ledit dispositif d'alimentation (6) est satisfaite, que dans le cas où la condition prédéterminée n'est pas satisfaite, et que dans le cas où ladite condition prédéterminée est satisfaite, un intervalle d'alimentation de l'agent de réduction dudit dispositif d'alimentation est rendu plus long dans le cas où la température dudit catalyseur de réduction catalytique sélective de NOₓ (7a) est inférieure à une température prédéterminée, que dans le cas où la température dudit catalyseur de réduction catalytique sélective de NOₓ (7a) est égale ou supérieure à la température prédéterminée, et d'une manière telle que dans le cas où ladite condition prédéterminée est satisfaite, et dans le cas où la température dudit catalyseur de réduction catalytique sélective de NOₓ (7a) est égale ou supérieure à la température prédéterminée, la quantité de NOₓ libérée par ledit moteur à combustion interne (1) est rendue plus grande en fonction de la quantité accrue de l'agent de réduction devant être délivré par unité de temps à partir dudit dispositif d'alimentation, que dans le cas où ladite condition prédéterminée n'est pas satisfaite, ou dans le cas où la température dudit catalyseur de réduction catalytique sélective de NOₓ (7a) est inférieure à la température prédéterminée.

2. Appareil de purification de gaz d'échappement pour un moteur à combustion interne (1) selon la revendication 1, dans lequel lesdits moyens de commande sont prévus pour réaliser une commande de telle sorte que
dans le cas où ladite condition prédéterminée est satisfaite, et dans le cas où la température dudit catalyseur de réduction catalytique sélective de NOₓ (7a) est inférieure à la température prédéterminée, l'intervalle d'alimentation de l'agent de réduction devant être délivré à partir dudit dispositif d'alimentation (6) est rendu plus long en fonction de ladite quantité accrue de l'agent de réduction devant être délivré par unité de temps.

3. Appareil de purification de gaz d'échappement pour un moteur à combustion interne (1) selon la revendication 1, dans lequel lesdits moyens de commande sont prévus pour réaliser une commande de telle sorte que
dans le cas où la température dudit catalyseur de réduction catalytique sélective de NOₓ (7a) est égale ou supérieure à la température prédéterminée, ledit dispositif de commande rend constant l'intervalle d'alimentation de l'agent de réduction, indépendamment du fait que ladite condition prédéterminée est satisfaite.
